# EUROPÄISCHE PATENTSCHRIFT

(11) **EP 2 360 064 B1**
(45) Veröffentlichungstag und Bekanntmachung des Hinweises auf die Patenterteilung: **18.06.2014**
(21) Anmeldenummer: 11153700.7
(22) Anmeldetag: 08.02.2011
(51) Int. Cl.: B60R 19/34

(54) **Vorrichtung und Verfahren zum adaptiven Abbau von Crashenergie**
Device and method for adaptive degeneration of crash energy
Dispositif et procédé de dégradation adaptative de l'énergie d'un crash

(30) Priorität: 15.02.2010 DE 102010001926
(43) Veröffentlichungstag der Anmeldung: 24.08.2011
(73) Patentinhaber: Robert Bosch GmbH, 70442 Stuttgart (DE)
(72) Erfinder: Friedrich, Thomas, 71691, Freiberg A. N. (DE); Nagel, Willi, 71686, Remseck/Hochdorf (DE); Goetzelmann, Bernd, 71277, Rutesheim (DE); Marchthaler, Reiner, 73333, Gingen (DE)

(56) Entgegenhaltungen:
- EP-A1- 2 022 682
- WO-A1-2009/063275
- DE-B4-102004 034 577
- DE-B4-102005 023 915
- GB-A- 2 442 879
- US-A1- 2008 185 852

## Beschreibung

### Stand der Technik

Die Erfindung betrifft eine Vorrichtung, ein Verfahren sowie ein Computerprogrammprodukt zum adaptiven Abbau von Crashenergie nach der Gattung der unabhängigen Patentansprüche.

Aus der Offenlegungsschrift EP 1 792 786 A2 ist eine Crashbox für ein Kraftfahrzeug bekannt, die ein gehäuseartiges Deformationsprofil mit einer längsträgerseitigen Flanschplatte aufweist und als Faltkonstruktion aus Metallblech ausgebildet ist. Das Deformationsprofil besteht aus zwei Schalenbauteilen, wobei an jedem Schalenbauteil ein Flanschplattenabschnitt angeformt ist. Die Schalenbauteile werden aus Ausgangsplatinen aus Metallblech gefaltet, anschließend zusammengesetzt und mittels Widerstandsschweißpunkten aneinander gefügt. Die Crashbox nimmt im Crashfall durch die Deformation des Deformationsprofils Energie auf, wobei die Energieaufnahmefähigkeit der Crashbox jedoch nicht einstellbar ist, d.h. es erfolgt keine Adaption der Crashbox an einen Crashvorgang.

Eine solche Adaption ist jedoch beispielsweise aus der Patentschrift DE 197 45 656 C2 bekannt. In der Patentschrift DE 197 45 656 C2 wird ein Pralldämpfer für ein Kraftfahrzeug beschrieben, der ein bei einem Fahrzeugaufprall verformbares Deformationselement umfasst, in dessen Weg ein Sperrteil hineinragt, mit welchem aufgrund der Krafteinwirkung beim Aufprall eine plastische Verformung des Deformationselements unter Absorption von Aufprallenergie herbeigeführt wird, wobei der Verformungswiderstand des Deformationselements durch eine Steuerung in einer zusätzlichen Deformationsstufe erhöht werden kann. Vorgeschlagen wird, dass sich Schieber an einem Deformationselement senkrecht zur Kraftrichtung bewegen und Deformationselemente dadurch sperren, so dass durch die Kraftwirkung diese Deformationselemente Crashenergie durch plastische Verformung aufgrund der Sperrung abbauen. Durch eine parallele Anordnung oder durch einen Ineinanderbau von solchen Deformationselementen ist eine Adaption auf den Crashvorgang möglich. Als weiteres Beispiel wird vorgeschlagen, ein Deformationselement durch eine Verjüngung zum Abbau von Crashenergie zu benutzen. Dabei ist ein Element zur Verjüngung fixiert und ein weiteres kann durch einen Schieber frei gegeben werden, um die Verjüngung zu reduzieren. Hierbei weist der Schieber mindestens zwei Schaltstellungen auf, in denen es in den Verschiebeweg des Deformationskörpers hineinragt, wodurch der Deformationskörper durch die Krafteinwirkung beim Aufprall weniger oder mehr plastisch verformt wird. Die mindestens zwei Schaltstellungen können in Abhängigkeit von einem Precrash-Signal oder einem Aufprallsignal gesteuert werden, wobei das Precrash-Signal beispielsweise von einer Rundumsichtsensorik wie einer Radarsensorik zur Verfügung gestellt werden kann. Die Bewegung des Schiebers erfolgt dabei radial, d.h. senkrecht zur Kraftrichtung und damit zur Längsachse des Deformationselements, das üblicherweise als Zylinder mit einer vorgegebenen Wanddicke ausgeführt ist.

In der Druckschrift GB 2 442 879 A wird eine Vorrichtung die den Oberbegriff der unabhängige Ansprüche entspricht zum adaptiven Abbau von Crashenergie mit einer adaptiven Crashstruktur, welche mindestens ein im Crashfall deformierbares Deformationselement, welches zum Abbau der Crashenergie eine plastische Verformung erfährt, und eine Aktuatorik umfasst, welche eine Energieabbaufähigkeit des mindestens einen im Crashfall deformierbaren Deformationselements ausgehend von einer Initialkonfiguration in Abhängigkeit von mindestens einem Steuersignal einstellt, mindestens einer Sensoreinheit zur Erfassung von crashrelevanten Informationen und einer Auswerte- und Steuereinheit beschrieben, welche die crashrelevanten Informationen von der mindestens einen Sensoreinheit empfängt und auswertet und in Abhängigkeit vom Auswerteergebnis mindestens ein Steuersignal zur Ansteuerung der mindestens einen Aktuatorik generiert und ausgibt. Hierbei ist die Initialkonfiguration der adaptiven Crashstruktur derart konfiguriert, dass eine maximale Energieabbaufähigkeit des Deformationselements eingestellt ist, um einen mechanischen Sicherungspfad mit einer höchsten Steifigkeit der adaptiven Crashstruktur einzurichten. Die Auswerte- und Steuereinheit führt eine Bewertung der Crashsituation durch und stellt die adaptive Crashstruktur in Abhängigkeit des ermittelten Crashtypus ein, um eine optimale Energieabbaufähigkeit für den ermittelten Crashtypus zu ermöglichen.

Auch die Druckschriften DE 10 2005 023 915 A1, DE 10 2004 034 577 A1, WO 2009/063275 A1, US 2008/0185852 A1 und EP 2 033 682 A1 offenbaren Vorrichtungen zum adaptiven Abbau von Crashenergie mit einer adaptiven Crashstruktur, welche mindestens ein im Crashfall deformierbares Deformationselement, welches zum Abbau der Crashenergie eine plastische Verformung erfährt, und eine Aktuatorik umfasst, welche eine Energieabbaufähigkeit des mindestens einen im Crashfall deformierbaren Deformationselements ausgehend von einer Initialkonfiguration, in welcher eine maximale Energieabbaufähigkeit des Deformationselements eingestellt ist, in Abhängigkeit von mindestens einem Steuersignal einstellt. Des Weiteren umfassen die Vorrichtungen mindestens eine Sensoreinheit zur Erfassung von crashrelevanten Informationen und eine Auswerteund Steuereinheit, welche die crashrelevanten Informationen von der mindestens einen Sensoreinheit empfängt und auswertet und in Abhängigkeit vom Auswerteergebnis mindestens ein Steuersignal zur Ansteuerung der mindestens einen Aktuatorik generiert und ausgibt. Hierbei führt die Auswerte- und Steuereinheit eine Bewertung der Crashsituation durch und stellt die adaptive Crashstruktur in Abhängigkeit des ermittelten Crashtypus ein, um eine optimale Energieabbaufähigkeit für den ermittelten Crashtypus zu ermöglichen.

### Offenbarung der Erfindung

Die erfindungsgemäße Vorrichtung zur Ansteuerung einer adaptiven Crashstruktur mit den Merkmalen des unabhängigen Patentanspruchs 1 hat demgegenüber den Vorteil, dass eine Initialkonfiguration einer adaptiven Crashstruktur, welche mindestens ein im Crashfall deformierbares Deformationselement, welches zum Abbau der Crashenergie eine plastische Verformung erfährt, und eine Aktuatorik umfasst, welche eine Energieabbaufähigkeit des mindestens einen im Crashfall deformierbaren Deformationselements ausgehend von der Initialkonfiguration in Abhängigkeit von mindestens einem Steuersignal einstellt, derart konfiguriert ist, dass eine maximale Energieabbaufähigkeit des Deformationselements eingestellt ist, um einen mechanischen Sicherungspfad mit einer höchsten Steifigkeit der adaptiven Crashstruktur einzurichten. Unabhängig vom Crashtypus erzeugt eine Auswerte- und Steuereinheit nach einem erkannten Crash das mindestens eine Steuersignal und gibt es zur Ansteuerung an die Aktuatorik aus, wobei die Aktuatorik in Reaktion auf das mindestens eine Steuersignal die Energieabbaufähigkeit des Deformationselements von der maximalen Energieabbaufähigkeit in Richtung minimale Energieabbaufähigkeit verändert, so dass sich die Steifigkeit der adaptiven Crashstruktur von der höchsten Steifigkeit in Richtung niedrigste Stei-figkeit verändert. Das bedeutet, dass die Steifigkeit der adaptiven Crashstruktur während des Crashs zwischen einem Aufprallzeitpunkt und einem Zeitpunkt verändert wird, an welchem die adaptive Crashstruktur zu wirken beginnt und Crashenergie abbaut bzw. aufnimmt. Die Auswerte- und Steuereinheit empfängt zur Erzeugung des mindestens einen Steuersignals beispielsweise crashrelevante Informationen von mindestens einer Sensoreinheit und wertet die empfangenen crashrelevanten Informationen aus.

Das erfindungsgemäße Verfahren zum adaptiven Abbau von Crashenergie mit den Merkmalen des unabhängigen Patentanspruchs 5 hat demgegenüber den Vorteil, dass in der Initialkonfiguration der adaptiven Crashstruktur eine maximale Energieabbaufähigkeit des Deformationselements eingestellt wird, um einen mechanischen Sicherungspfad mit einer höchsten Steifigkeit der adaptiven Crashstruktur einzurichten, wobei nach einem erkannten Crash unabhängig vom Crashtypus das mindestens eine Steuersignal erzeugt und ausgegeben wird, wobei in Reaktion auf das mindestens eine Steuersignal die Energieabbaufähigkeit des Deformationselements von der maximalen Energieabbaufähigkeit in Richtung minimale Energieabbaufähigkeit verändert wird, so dass sich die Steifigkeit der adaptiven Crashstruktur von der höchsten Steifigkeit in Richtung niedrigste Steifigkeit verändert.

Für den Bereich von adaptiven Crashstrukturen, insbesondere für adaptive Frontstrukturen existieren bereits verschiedene Ansätze und Ideen, deren Kern darin besteht, die Steifigkeit der Crashstrukturen adaptiv zu gestalten. Diese werden dann vor- bzw. während der Kollision angepasst, so dass eine höhere Energieaufnahme der Crashstruktur bzw. Frontstruktur stattfindet. Das bedeutet, dass beispielsweise eine weiche Frontstruktur bei Intrusion eines Fußgängers oder aber auch eine härtere Frontstruktur bei Intrusion eines Fahrzeugs eingestellt wird. Hierbei wird die Aktivierung von irreversiblen Sicherheitssystemen immer auf Plausibilität geprüft. Es reicht also nicht aus, wenn nur ein Sensor einen Crash detektiert, es muss mindestens ein weiterer Sensor den Crash detektieren und somit plausibilisieren. Dies ist ein sehr wichtiger Sicherheitsaspekt, der zur Folge hat, dass im Feld nur äußerst wenige Fehlauslösungen von irreversiblen Sicherheitssystemen, wie beispielsweise Airbags auftreten. Bei einer Airbagauslösung, insbesondere bei einer Frontairbagauslösung, ist eine Plausibilisierung durch ein zentrales Airbagsteuergerät in der Regel vorteilhaft, da bei der Frontairbagauslösung der Grundsatz "je früher der Zündzeitpunkt, desto besser" nicht gilt, weil der Airbag im Zusammenspiel mit einem Gurtsystem funktionieren muss. Da der Insasse relativ spät in den Airbag eintaucht (Größenordnung 30 bis 40ms) ist die relativ späte Plausibilisierung der Frontairbagauslösung durch das zentrale Airbagsteuergerät durchaus implementierbar. Im Anwendungsbereich der adaptiven Crashstrukturen bei Frontcrashs, kann sich die Plausibilisierung der Aktivierung der adaptiven Crashstruktur negativ auswirken. Eine adaptive Crashstruktur im Frontbereich befindet sich in bekannter Weise im vorderen Bereich des Fahrzeugs, somit wird diese eine Deformation unmittelbar nach dem Kontaktzeitpunkt erfahren müssen. Die adaptive Crashstruktur muss demnach ihre Steifigkeit binnen wenige Millisekunden anpassen (Größenordnung <10ms). Ausführungsformen der vorliegenden Erfindung ermöglichen durch die Umsetzung des mechanischen Sicherungspfades ein solch schnelles Ansteuerungskonzept der adaptiven Crashstruktur, da die Steifigkeitsänderung der adaptiven Crashstruktur beschleunigt wird, ohne die Fehlauslöserate zu erhöhen.

Kern der Erfindung ist es, die adaptive Crashstruktur so anzusteuern, dass zum einen Zeit gewonnen wird, weil durch die Erfindung die Plausibilitätsprüfung mittels eines anderen Sensors entfallen kann, und zum Anderen die Redundanz bzw. Sicherheit des Systems mechanisch und nicht elektronisch implementiert ist. Hierbei wird der mechanische Sicherheitspfad dadurch systembedingt integriert, dass die adaptive Crashstruktur in der Initialkonfiguration die höchste Steifigkeit aufweist, was zur Folge hat, dass die Sicherheit bzw. Robustheit der Vorrichtung zum adaptiven Abbau von Crashenergie bezüglich Fehlauslösungen erhöht ist. Erfindungsgemäß wird die Steifigkeit der adaptiven Crashstruktur ausgehend von der höchsten Steifigkeit in Richtung niedrigste Steifigkeit verändert, sobald ein Sensor irgendeinen Crashvorgang detektiert. Ein wesentlicher Gedanke der Erfindung besteht darin, dass die Steifigkeit der adaptiven Crashstruktur im stromlosen Zustand "per Default" auf die maximale Steifigkeit eingestellt wird. Bei einem erkannten Crash wird dann die Steifigkeit der adaptiven Crashstruktur abgesenkt. Der Fokus liegt auf dem Selbstschutz. Die Zeit, die der Aktuatorik für die Einstellung der Energieabbaufähigkeit der adaptiven Crashstruktur zur Verfügung steht, hängt von der Crashgeschwindigkeit ab. Geschieht beispielsweise ein leichter Crash mit einer relativen Geschwindigkeit von ca. 18km/h, das sind 5m/s oder 5mm/ms, bedeutet das, dass die adaptive Crashstruktur mit 5mm/ms deformiert wird. Geschieht allerdings ein schwerer Crash mit einer relativen Geschwindigkeit von ca. 64km/h, wird die adaptive Crashstruktur mit 17,8mm/ms deformiert. Ziel ist es daher bei einer adaptiven Crashstruktur die Aktuierungszeit so klein wie möglich zu halten, vorzugsweise im einstelligen Millisekundenbereich, um eine Einstellung der Steifigkeit der adaptiven Crashstruktur nach dem Aufprallzeitpunkt realisieren zu können. Eine Intrusion, die bei einem Crash während der Verstellbewegung der Aktuatorik erfolgt, wird auch als "Todweg" bezeichnet. Da die Aktuatorik nur im kraftfreien oder lastfreien Zustand schnell arbeiten kann, trägt dieser Todweg nur wenig zur Lastaufnahme der adaptiven Crashstruktur bei. Im Klartext heißt das, dass die Crashenergie erst dann sinnvoll abgebaut werden kann, wenn der Todweg vorbei ist. Dieser Todweg muss konstruktiv im Design der adaptiven Crashstruktur umgesetzt werden: Die adaptive Crashstruktur muss dann so konstruiert werden, dass innerhalb der Todzeit immer noch eine Steifigkeitsänderung realisiert werden kann. Dies bedeutet, dass die Struktur künstlich verlängert werden muss. Eine Möglichkeit diesen Todweg bzw. die Todzeit zu reduzieren ist es eine vorausschauende Sensorik zu verwenden, so dass die Sensierung, die Rechenzeit und die Verstellung dann vor dem Aufprallzeitpunkt stattfinden können. Die andere Möglichkeit besteht in der Verwendung von Ausführungsformen der vorliegenden Erfindung, welche die Steifigkeit der Crashstruktur immer absenken, sobald irgendein Crash detektiert wird. Daraus ergeben sich zwei Szenarios. Bei einem ersten Szenario, das einen leichten Crash betrifft, wird die adaptive Crashstruktur aufgrund der niedrigen Crashgeschwindigkeit und der ausreichenden Verstellzeit auf eine niedrige Steifigkeit, d.h. weich eingestellt, so dass eine gewünschte niedrige Energieabbaufähigkeit eingestellt wird und das erzielte Ergebnis in Ordnung ist. Bei einem zweiten Szenario, das einen schweren Crash betrifft, wird ebenfalls versucht die adaptive Crashstruktur auf weich zu stellen, was jedoch aufgrund der hohen Crashgeschwindigkeit und der damit verbundenen kurzen Verstellzeit unmöglich ist, da kein ausreichend langer Todweg zur Verfügung steht. Somit kann die Steifigkeit der adaptiven Crashstruktur nicht herabgesetzt werden und die Steifigkeit der adaptiven Crashstruktur bleibt unverändert, so dass eine gewünschte hohe Energieabbaufähigkeit eingestellt wird und das erzielte Ergebnis in Ordnung ist. Der im zweiten Szenario beschriebene Ablauf stellt den immer aktiven mechanischen Sicherungspfad dar. Ausführungsformen der vorliegenden Erfindung sind so robust, dass keine weitere Plausibilisierung erforderlich ist, weil diese bereits mechanisch integriert ist. Der wesentliche technische Vorteil der vorliegenden Erfindung besteht darin, dass die Aktuierungszeit als ein positives Merkmal dargestellt wird. Entweder hat die Aktuatorik Zeit die Struktursteifigkeit abzusenken, dann war es auch tatsächlich ein leichter Crash, oder die Aktuierungszeit, die der Aktuatorik zur Verfügung steht, war zu kurz, weil der erforderliche Todweg zu lange ist, dann hat eine Absenkung der Steifigkeit nicht stattgefunden, dann war der Crash auch tatsächlich hart.

Diese Vereinfachung funktioniert lediglich bei adaptiven Crashstrukturen, nicht jedoch bei einer Airbagauslösung. Ausführungsformen der vorliegenden Erfindung können bei irreversiblen Systemen angewandt werden, aber der größere Vorteil liegt bei reversiblen Systemen. Grund dafür ist, dass die Sensorik bei reversiblen Systemen trotz des Risikos von eventuellen Fehlauslösungen viel empfindlicher gestaltet werden kann. Mit Fehlauslösung ist hier eine unerwünschte Verstellung der Aktuatorik gemeint, die beispielsweise durch ein Schlagloch in der Straße, oder eine leichte Kollision mit einer Mülltonne oder einem Garagentor ausgelöst werden kann. Da das System reversibel ist, kann sich die Aktuatorik bei Ausbleiben eines richtigen Aufpralls ohne weitere negative Auswirkungen wieder in ihre Ursprungsposition zurückverstellen.

Die resultierenden wichtigsten Vorteile der vorliegenden Erfindung bestehen darin, dass eine sichere und robuste Einstellung der Steifigkeit der adaptiven Crashstruktur erfolgen, eine schnellere Einstellung der Steifigkeit durchgeführt werden, die Todlänge reduziert werden und somit der Bauraum der adaptiven Crashstruktur auf ein Minimum reduziert werden kann. Daraus ergibt sich in vorteilhafter Weise ein geringeres Eigengewicht der adaptiven Crashstruktur und der Bauraum des Fahrzeugs kann effektiv reduziert werden. Mit jedem in einem primären Einsparprozeß eingespartem Kilogramm Gewicht an primären Bauteilen des Fahrzeugs, z.B. Gewicht der Struktur, kann über sekundäre Maßnahmen, wie beispielsweise kleinere Motorhaube, kleinere Kotflügel, kleinerer Motor, Nebenaggregate usw., ein ähnlicher Gewichtsbetrag eingespart werden. In diesem Kontext spielt insbesondere eine Verkürzung der Fahrzeugstruktur im Frontbereich eine wichtige Rolle. Eine Längeneinsparung von z.B. 20 cm kann unter Umständen eine Gewichtseinsparung von 10 bis 30 kg bedeuten. Um eine solche Längenreduktion unter Beibehaltung des Sicherheitsniveaus umzusetzen, bieten sich insbesondere adaptive Frontstrukturen an. Deren Charakteristik liegt in einer crashsituationsadaptiven Anpassung der Steifigkeit. Ausführungsformen der vorliegenden Erfindung ermöglichen es, die typischen Fälle wie eine leichte Frontkollision im Sinne eines AZT-Tests (Parkrempler mit 15 km/h) und eines Crashtests mit ca. 60 km/h abzudecken. Die Anpassung der Steifigkeit basiert nun auf eine Regelung eben dieses Tragsystems bzw. einer adaptiven Crashbox.

Unter dem Steuersignal wird eben das Signal verstanden, das die Aktuatorik veranlasst, ausgehend von der Initialkonfiguration die entsprechende Einstellung der Energieaufnahmefähigkeit bzw. des Kraftniveaus der adaptiven Crashstruktur einzustellen. Dieses Steuersignal kann von außerhalb der Vorrichtung stammen, beispielsweise von einem Sicherheitssteuergerät, insbesondere einem Airbagsteuergerät. Das Steuersignal kann jedoch auch intern innerhalb der Vorrichtung, beispielsweise von der Recheneinheit oder einer entsprechenden Steuerschaltung erzeugt werden. Das Steuersignal kann dabei analog ausgeführt sein oder auch digital. Eine digitale Ausführung verlangt eine entsprechende Auswertung durch die Aktuatorik.

Der adaptive Abbau der Crashenergie bedeutet, dass die Crashenergie, die durch den Aufprall entsteht, durch die Crashstruktur in angepasster Weise durch eine plastische Verformung zumindest teilweise aufgenommen wird. Unter plastischer Verformung ist eine reversible oder irreversible Verformung eines Deformationselements aus Metall, Kunststoff, verstärktem Kunststoff oder einem anderen geeigneten Material zu verstehen. Die plastische Verformung kann beispielsweise durch Verjüngen, Falten, Biegen, Schälen, Abschaben usw. bewirkt werden. Unter einem Deformationselement wird dabei ein Energieabsorptionselement verstanden, das sich beispielsweise beim Aufprall eines Objektes auf das Fahrzeug irreversibel oder reversibel verformt. Durch die Verformung wird Energie aufgenommen, und auf diese Weise der Aufprall des Objektes auf das Fahrzeug (oder andersherum des Fahrzeugs auf das Objekt) abgedämpft. Das Deformationselement kann beispielsweise aus einer Blech-Faltkonstruktion bestehen, die sich bei einem Aufprall eines Fremdfahrzeugs oder eines Baums als Objekt verbiegt und dabei einen gewissen Teil der Aufprallenergie aufnimmt. Au-βerdem kann es sich bei dem Deformationselement beispielsweise um einen Zylinder aus Stahl handeln, dessen Energieaufnahmefähigkeit bzw. Kraftniveaus im Crashvorgang adaptiv eingestellt wird, wobei die Energieaufnahme bzw. der Abbau der Crashenergie durch eine plastische Verformung beispielsweise in Form einer Verjüngung des Deformationselements erreicht wird, wobei der Grad der Verjüngung des Deformationselements über die Aktuatorik einstellbar ist. Durch die Adaption können Kosten gespart werden. Der Insassenschutz sowie der Partnerschutz, d.h. der Schutz der Insassen des Unfallgegners werden dadurch verbessert.

Neben Stahl können auch andere Materialien wie Kunststoffe oder Werkstoffverbunde oder ähnliches verwendet werden, aber auch andere Geometrien wie ein Konus, ein Zylinder mit einem elliptischen Querschnitt oder auch rechteckige oder quadratische Formen sind hier möglich. Ebenso sind Geometrien verwendbar, deren Wandstärken nicht über die Länge konstant sind, z.B. ein zylindrisches Rohr mit zunehmender Wandstärke. Das Deformationselement kann insbesondere hohl sein, z.B. ein einfaches Rohr, oder es kann in der Mitte bzw. in den Hohlräumen, wenn es sich um mehrere Hohlräume handelt, mit diversen Materialien angefüllt sein wie z.B. einem Aluminiumschaum. Dieser Aluminiumschaum bietet neben der höheren Robustheit gegen das Knicken den Vorteil, entweder eine höhere Energieabsorption gewährleisten zu können oder einen kleineren Rohrdurchmesser verwenden zu können. Eine weitere Alternative das Füllmaterial effektiv auszunutzen, ist eine geringere Wandstärke des Rohrs bzw. des Zylinders zu verwenden. Die Richtung, in der sich das Deformationselement verformt, ist üblicherweise die Crashrichtung. Bei einem Frontalaufprall ist dies in Richtung der Längsachse des Fahrzeugs, die üblicherweise auch als X-Richtung bezeichnet wird.

Durch die in den abhängigen Ansprüchen aufgeführten Maßnahmen und Weiterbildungen sind vorteilhafte Verbesserungen, der im unabhängigen Patentanspruch 1 angegebenen Vorrichtung bzw. des im unabhängigen Patentanspruch 5 angegebenen Verfahrens möglich.

Besonders vorteilhaft ist, dass die Initialkonfiguration der adaptiven Crashstruktur einem stromlosen Zustand der Aktuatorik entspricht, dadurch kann die Sicherheit bzw. Robustheit der Vorrichtung zum adaptiven Abbau von Crashenergie bezüglich Systemausfälle erhöht werden.

In vorteilhafter Ausgestaltung der erfindungsgemäßen Vorrichtung verändert die Aktuatorik die Energieabbaufähigkeit des Deformationselements in Reaktion auf das mindestens eine Steuersignal kontinuierlich und/oder stufenweise von der maximalen Energieabbaufähigkeit in Richtung minimale Energieabbaufähigkeit.

In weiterer vorteilhafter Ausgestaltung der erfindungsgemäßen Vorrichtung weist die adaptive Crashstruktur eine Verformungseinheit mit mindestens einem Verformungselement auf, welches die plastische Verformung des Deformationselements bewirkt.

Ausführungsformen der vorliegenden Erfindung können als Schaltung, Vorrichtung, Verfahren, Datenverarbeitungsprogramm mit Programmcodemitteln und/oder als Computerprogrammprodukt realisiert werden. Entsprechend können Ausführungsformen der vorliegenden Erfindung vollständig als Hardware und/oder als Software und/oder als Kombination aus Hardware- und/oder Softwarekomponenten ausgeführt werden. Zudem kann die vorliegende Erfindung als Computerprogrammprodukt auf einem computernutzbaren Speichermedium mit computerlesbarem Programmcode ausgeführt werden, wobei verschiedene computerlesbare Speichermedien wie Festplatten, CD-ROMs, optische oder magnetische Speicherelemente usw. benutzt werden können.

Ein Ausführungsbeispiel der Erfindung ist in den Zeichnungen dargestellt und wird in der nachfolgenden Beschreibung näher erläutert.

### Kurze Beschreibung der Zeichnungen

Fig. 1 zeigt ein schematisches Blockdiagramm eines Ausführungsbeispiels einer Vorrichtung zum adaptiven Abbau von Crashenergie für ein Kraftfahrzeug.
Fig. 2 zeigt ein schematisches Blockdiagramm einer herkömmlichen Vorrichtung zum adaptiven Abbau von Crashenergie für ein Kraftfahrzeug.
Fig. 3 zeigt eine zeitliche Gegenüberstellung von Verstellvorgängen zur Einstellung einer gewünschten Steifigkeit einer korrespondierenden adaptiven Crashstruktur in der herkömmlichen Vorrichtung aus Fig. 2 und in der erfindungsgemä-βen Vorrichtung aus Fig. 1.

### Ausführungsformen der Erfindung

Im Zuge der Entwicklungen der passiven Sicherheit bei Kraftfahrzeugen steht zunächst der Selbstschutz im Vordergrund. Dies ist die Eigenschaft des Kraftfahrzeugs seine eigenen Insassen sowohl in Fahrzeug-Fahrzeug-Kollisionen als auch in Kollisionen mit anderen Objekten zu schützen. Hierfür werden unter anderem beispielsweise Crashboxen eingesetzt. Derartige Crashboxen für Kraftfahrzeuge sind auf dem Markt bekannt und üblicherweise zur Anordnung zwischen einem Stoßfängersystem und der Karosserie des Kraftfahrzeugs vorgesehen. Durch die Crashbox soll im Crashfall bei einem Aufprall des Kraftfahrzeugs Energie absorbiert werden, um Teile des Kraftfahrzeugs und die Insassen des Kraftfahrzeugs zu schützen. In der Regel ist die Crashbox derart ausgestaltet, dass diese bei einem Aufprall mit sehr geringer Geschwindigkeit des Kraftfahrzeugs nur reversibel verformt wird, so dass hierbei keinerlei Schäden am Kraftfahrzeug auftreten. Bei einem Aufprall mit geringfügig höherer Geschwindigkeit nimmt die Crashbox in vorteilhafter Weise so viel Energie auf, dass nur das Stoßfängersystem beschädigt wird, nicht jedoch die übrige Karosserie des Kraftfahrzeugs. Zunehmend rücken bei der Entwicklung von Crashboxen außer dem Insassenschutz jedoch noch Themen bezüglich Partnerschutz und Crashkompatibilität in den Vordergrund. Partnerschutz ist die Eigenschaft des Kraftfahrzeugs die Insassen des gegnerischen Fahrzeugs in einer Fahrzeug-Fahrzeug-Kollision zu schützen, also eine möglichst geringe Aggressivität zu haben.

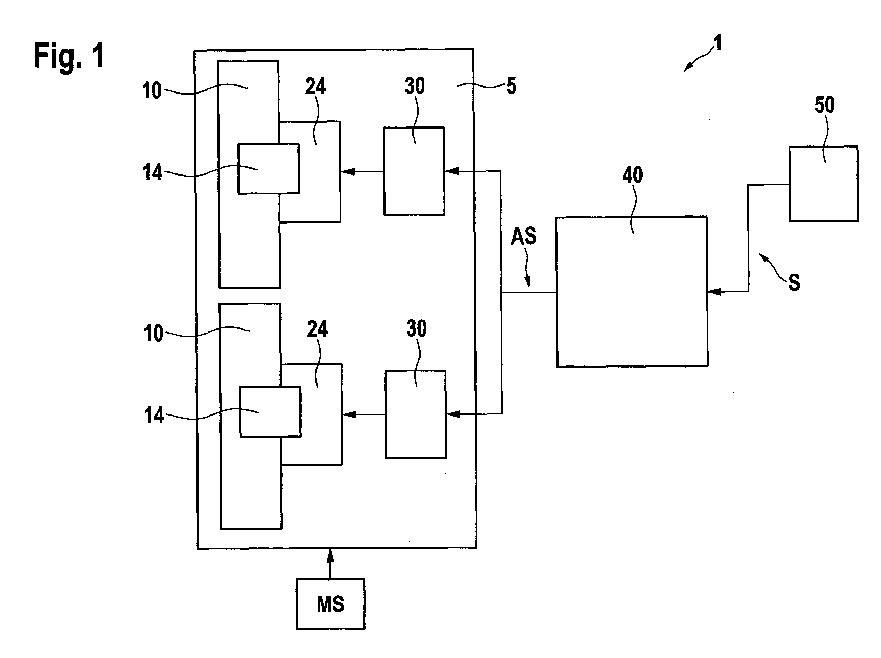

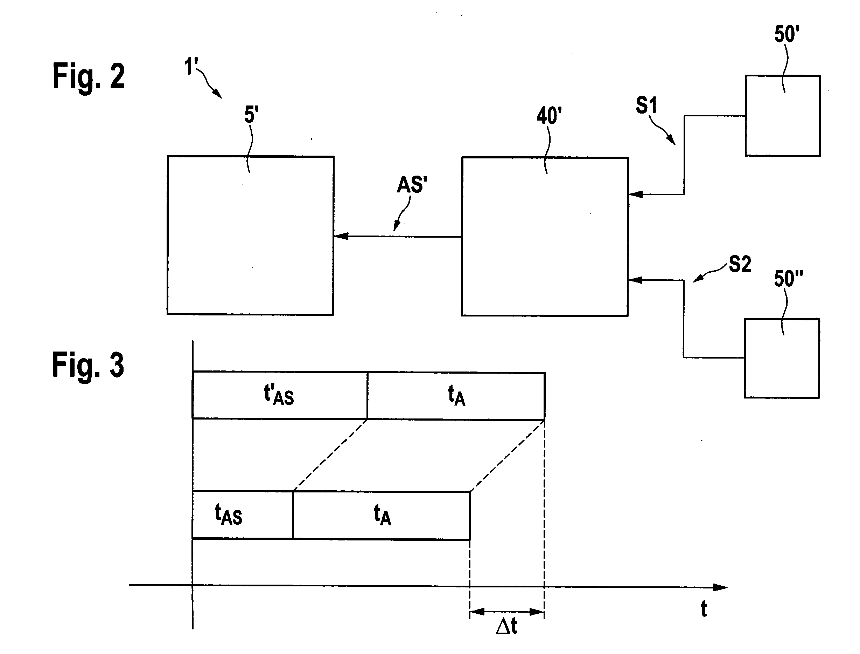

Fig. 1 zeigt ein schematisches Blockdiagramm eines Ausführungsbeispiels einer Vorrichtung 1 zum adaptiven Abbau von Crashenergie für ein Kraftfahrzeug mit einer adaptiven Crashstruktur 5, einer Auswerte- und Steuereinheit 40 und einem Sensorsystem 50, und Fig. 2 zeigt ein schematisches Blockdiagramm einer herkömmlichen Vorrichtung zum adaptiven Abbau von Crashenergie für ein Kraftfahrzeug mit einer adaptiven Crashstruktur 5', einer Auswerte- und Steuereinheit 40' und zwei Sensorsystemen 50', 50". Hierbei kann die adaptive Crashstruktur 5' der herkömmlichen Vorrichtung 1' im Wesentlichen gleich aufgebaut sein, wie die adaptive Crashstruktur 5 der erfindungsgemäßen Vorrichtung 1.

Der wesentliche Unterschied zwischen der herkömmlichen Vorrichtung 1' und der erfindungsgemäßen Vorrichtung 1 besteht in der Generierung des Steuersignals AS' bzw. AS zur Ansteuerung der adaptiven Crashstruktur 5' bzw. 5. Bei der herkömmlichen Vorrichtung 1' zum adaptiven Abbau von Crashenergie werden bei einem Fahrzeugunfall und bei einer dementsprechenden Unfallschwere unter anderem reversible und/oder irreversible Sicherheitssysteme wie Airbag, Gurtstraffer, Gurtkraftminderer, adaptive Crashstruktur usw. über entsprechende Steuersignale AS' ausgelöst um die Insassen zu schützen Bei solch einer Auslösung wird die Entscheidung in der Regel über zwei Sensorsignale S1, S2 getroffen. Hierbei repräsentiert ein erstes Sensorsignal S1 ein Triggersignal mit einer höheren Auslöseschwelle, das im Allgemeinen von einem Klassifikationsalgorithmus erzeugt wird, und ein zweites Sensorsignal S2 repräsentiert ein Plausibilitätssignal, mit einer niedrigeren Auslöseschwelle. Diese Signale S1, S2 werden von verschiedenen Sensoren bzw. Sensoreinheiten 50', 50" zur Verfügung gestellt, welche beispielsweise Upfrontsensoren, das sind im Frontbereich des Fahrzeugs angeordnete Beschleunigungssensoren, periphere Beschleunigungssensoren in der Fahrzeugseite (PAS), periphere Drucksensoren in der Fahrzeugseite (PPS), zentrale Beschleunigungssensoren, die beispielsweise in einem Airbag-Steuergerät angeordnet sind, usw. umfassen. Diese Trigger- und Plausibilitätssignale S1, S2 sind in der Regel erforderlich um Fehlauslösungen auszuschließen. Eine Zuordnung, welches Sensorsignal als Trigger- oder als Plausibilitätssignal S1, S2 verwendet wird, kann durch den verwendeten Auslösealgorithmus bestimmt werden. Bekannt ist auch die Verwendung von Umfeldsensoren, wie z.B. Radarsensoren, Kameras usw. um das Auslöseverhalten der Rückhaltesysteme und der adaptiven Crashstruktur 5' durch schon vor dem Crash ermittelte Informationen zu verbessern. Im Bereich der Crashabsorption sind Crashabsorber, wie z.B. Crashboxen, bekannt, die eine definierte Steifigkeit aufweisen. Sie werden hauptsächlich eingesetzt, um Anforderungen von AZT-Crashs zu erfüllen. Ebenso sind adaptive Crashboxen bekannt, die auf Basis einer Umfeldsensorik und/oder einer Precrash-Sensorik ihre Steifigkeit situationsbedingt ändern können. Die Hauptidee von adaptiven Frontstrukturen besteht darin, die Steifigkeit der adaptiven Crashstruktur 5' vor- bzw. während der Kollision anzupassen, so dass eine höhere Energieaufnahme der Frontstruktur ermöglicht wird. Dies bedeutet beispielsweise eine weiche Frontstruktur bei Intrusion eines Fußgängers oder aber auch eine härtere Frontstruktur bei Intrusion eines Fahrzeugs.

Wie aus Fig. 1 ersichtlich ist, umfasst die adaptive Crashstruktur 5 der Vorrichtung 1 zum adaptiven Abbau von Crashenergie zwei Crashboxen 10, deren Steifigkeit jeweils durch eine Aktuatorik 30 über eine Verformungseinheit 24 ausgehend von einer Initialkonfiguration einstellbar ist. Hierbei ist zum adaptiven Abbau von Crashenergie für jede Crashbox 10 ein deformierbares Deformationselement 14 vorgesehen. Die Energieaufnahmefähigkeit bzw. das Kraftniveaus der adaptiven Crashstruktur 5 wird im dargestellten Ausführungsbeispiel über eine Verjüngung der Deformationselemente 14 eingestellt. Die jeweilige Aktuatorik 30 stellt die Verjüngung des jeweiligen Deformationselements 14 der korrespondierenden Crashbox 10 unter Verwendung von Verformungseinheiten 24 ein, welche die Deformationselemente 14 zum Abbau von Crashenergie im Crashfall plastisch verformen. Selbstverständlich können auch andere dem Fachmann bekannte Möglichkeiten zum Einstellen der Energieaufnahmefähigkeit umgesetzt werden, beispielsweise eine Schälcrashbox oder ein variable Faltcrashbox. Die dargestellte adaptive Crashstruktur 5 ist im Fahrzeug zwischen einem nicht dargestellten Stoßfängersystem und der Karosserie des Fahrzeugs angeordnet.

Wie aus Fig. 1 weiter ersichtlich ist, ist die Auswerte- und Steuereinheit 40 mit der Sensoreinheit 50 gekoppelt, welche crashrelevante Informationen S erfasst und der Auswerte- und Steuereinheit 40 über eine entsprechende nicht dargestellte Schnittstelle zur Verfügung stellt. Die Auswerte- und Steuereinheit 40 empfängt die crashrelevanten Informationen von der mindestens einen Sensoreinheit 50, wertet die crashrelevanten Informationen aus und erzeugt in Abhängigkeit vom Auswerteergebnis mindestens ein Steuersignal AS zur Ansteuerung der mindestens einen Aktuatorik 30. Über mindestens eine weitere nicht dargestellte Schnittstelleneinheit gibt die Auswerte- und Steuereinheit 40 das mindestens eine Steuersignal AS an die mindestens eine Aktuatorik 30 aus. Die mindestens eine Aktuatorik 30 ist in der Lage, eine Energieaufnahmefähigkeit des mindestens einen im Crashfall deformierbaren Deformationselements 14 der adaptive Crashstruktur 5 ausgehend von der Inertialkonfiguration in Abhängigkeit von dem mindestens einen Steuersignal einzustellen.

Erfindungsgemäß ist die Initialkonfiguration der adaptiven Crashstruktur 5 derart konfiguriert, dass eine maximale Energieabbaufähigkeit des Deformationselements 14 eingestellt ist, um einen mechanischen Sicherungspfad MS mit einer höchsten Steifigkeit der adaptiven Crashstruktur 5 einzurichten. Hierbei erzeugt die Auswerte- und Steuereinheit 40 nach einem erkannten Crash unabhängig vom Crashtypus das mindestens eine Steuersignal AS und gibt es zur Ansteuerung an die mindestens eine Aktuatorik 30 aus, wobei die jeweilige Aktuatorik 30 in Reaktion auf das mindestens eine Steuersignal AS die Energieabbaufähigkeit des korrespondierenden Deformationselements 14 von der maximalen Energieabbaufähigkeit in Richtung minimale Energieabbaufähigkeit verändert, so dass sich die Steifigkeit der adaptiven Crashstruktur 5 von der höchsten Steifigkeit in Richtung niedrigste Steifigkeit verändert. Im dargestellten Ausführungsbeispiel der vorliegenden Erfindung entspricht die Initialkonfiguration der adaptiven Crashstruktur 5 gleichzeitig einem stromlosen Zustand der Aktuatorik 30. Je nach Ausführung der Aktuatorik 30 bzw. der Verformungseinheit 24 kann die Energieabbaufähigkeit des korrespondierenden Deformationselements 14 in Reaktion auf das mindestens eine Steuersignal AS kontinuierlich und/oder stufenweise von der maximalen Energieabbaufähigkeit in Richtung minimale Energieabbaufähigkeit verändert werden.

Durch Ausführungsformen der vorliegenden Erfindung kann die Steifigkeitsanpassung der adaptiven Crashstruktur 5 beschleunigt werden, ohne die Fehlauslöserate zu erhöhen. So kann dadurch Zeit gewonnen werden, dass durch das Vorhanden sein des mechanischen Sicherungspfads MS die Plausibilitätsprüfung durch ein zweites Sensorsignal entfallen kann. Zudem wird durch den mechanischen Sicherungspfad MS die Redundanz bzw. Sicherheit des Systems mechanisch systembedingt implementiert, was zur Folge hat, dass die Sicherheit bzw. die Robustheit bezüglich Fehlauslösungen erhöht wird.

Durch die erfindungsgemäß in der Inertialkonfiguration eingestellte maximale Steifigkeit der adaptiven Crashstruktur 5 liegt der Fokus auf dem Selbstschutz. Unabhängig vom Typus des erkannten Crashs wird dann die Steifigkeit der adaptiven Crashstruktur 5 von der maximalen Steifigkeit in Richtung minimale Steifigkeit verändert. Die Zeitspanne, die der Aktuatorik 30 für eine Veränderung der Steifigkeit zur Verfügung steht, hängt von der Crashgeschwindigkeit ab. Geschieht beispielsweise ein leichter Crash mit einer relativen Geschwindigkeit von ca. 18km/h, das sind 5m/s oder 5mm/ms, bedeutet das, dass die adaptive Crashstruktur 5 mit 5mm/ms deformiert wird. Geschieht allerdings ein schwerer Crash mit einer relativen Geschwindigkeit von 64km/h, wird die adaptive Crashstruktur mit 17,8mm/ms deformiert. Ziel ist es daher bei einer adaptiven Crashstruktur 5 die Aktuierungszeit so klein wie möglich zu halten, vorzugsweise im einstelligen Millisekundenbereich. Benötigt die Vorrichtung 1 zum adaptiven Abbau von Crashenergie mit Erfassung und Verarbeitung der crashrelevanten Informationen S und dem Algorithmus zur Erzeugung des Steuersignals AS und der Verstellbewegung durch die Aktuatorik 30 beispielsweise 8ms, um eine Steifigkeitseinstellung durchzuführen, dann entspricht dies bei leichten Crashs einer Intrusion von 8ms x 5mm/ms = 40mm, und bei schweren Crashs eine Intrusion von 17,8mm/ms x 8ms = 142mm. Diese Intrusionen von z.B. 40mm oder 142mm repräsentieren einen so genannten "Todweg". Dieser Todweg ist der Intrusionsweg, der zurückgelegt wird, solange die Energieabbaufähigkeit bzw. die Steifigkeit der adaptiven Crashstruktur 5 eingestellt wird. Da die Aktuatorik 30 nur im kraftfreien oder lastfreien Zustand schnell arbeiten kann, trägt dieser Todweg nur wenig zur Lastaufnahme der adaptiven Crashstruktur 5 bei. Im Klartext heißt das, dass die Crashenergie erst dann sinnvoll abgebaut werden kann, wenn der Todweg vorbei ist. Dieser Todweg muss konstruktiv (Hardwaremäßig) im Design der adaptiven Struktur umgesetzt werden. Die adaptive Crashstruktur 5 wird daher so konstruiert, dass innerhalb der Todzeitspanne immer noch eine Steifigkeitsänderung realisiert werden kann. Da Ausführungsformen der Erfindung nach einem erkannten Crash, unabhängig vom Crashtypus, immer die Verstellung der Energieabbaufähigkeit bzw. der Steifigkeit vom maximalen Wert in Richtung minimalem Wert ohne Plausibilisierung des Sensorsignals S durchführen kann die Todzeitspanne in vorteilhafter Weise verkürzt werden.

Der wesentliche technische Vorteil der vorliegenden Erfindung besteht darin, dass die Aktuierungszeit als ein positives Merkmal dargestellt wird. Entweder hat die Aktuatorik 30 Zeit die Struktursteifigkeit abzusenken, dann war es auch tatsächlich ein leichter Crash, oder die Aktuierungszeit, die der Aktuatorik 30 zur Verfügung stand, war zu kurz weil der benötigte Todweg zu lange ist, dann hat eine Absenkung der Steifigkeit nicht stattgefunden, dann war der Crash auch tatsächlich hart.

In folgender Tabelle 1 sind alle möglichen Fälle beschrieben:

**Tabelle 1**

| | | |
|---|---|---|
| Tatsächlicher Crash | Status der Steifigkeitseinstellung | Ergebnis / Bemerkung |
| leicht | Aktuatorik senkt Steifigkeit | no-fire-crash, nur Blechschaden |
| hart | Aktuatorik will Steifigkeit absenken | Unmöglich, weil die Aktuatorik keine Zeit hat die Struktur zu verstellen (mechanischer Sicherheitspfad). Struktur bleibt also hart. Fire-crash, Rückhal-temittel der passiven Sicherheit werden ausgelöst. |
| leicht | Crashbox defekt - Defaultstellung = hart | Blechschaden, Reparaturkosten evtl. teurer weil sich die Crashbox nicht ordnungsgemäß verformt. Insassen bleiben unverletzt weil leichter Crash. |
| hart | Crashbox defekt - Defaultstellung = hart | Fire-crash, Rückhaltemittel der passiven Sicherheit werden ausgelöst. |

Ausführungsformen der Erfindung können bei irreversiblen Systemen angewandt werden, aber der größere Vorteil liegt bei reversiblen Systemen. Grund dafür ist, dass die Sensorik 50 bei reversiblen Systemen viel empfindlicher gestaltet werden kann mit dem Risiko unter Umständen Fehlauslösungen herbeizuführen. Mit Fehlauslösung ist hier eine unerwünschte Verstellung der Aktuatorik 30 gemeint, die beispielsweise durch ein Schlagloch in der Straße, oder eine leichte Kollision mit einer Mülltonne oder einem Garagentor ausgelöst werden kann. Da das System reversibel ist, kann sich die Aktuatorik 30 wieder in ihre Initialkonfiguration zurückverstellen.

Fig. 3 zeigt eine zeitliche Gegenüberstellung von Verstellvorgängen zur Einstellung einer gewünschten Steifigkeit einer korrespondierenden adaptiven Crashstruktur in der herkömmlichen Vorrichtung 1' aus Fig. 2 und in der erfindungsgemäßen Vorrichtung 1 aus Fig. 1, wobei der obere Balken den zeitlichen Ablauf in der herkömmlichen Vorrichtung 1' zum adaptiven Abbau von Crashenergie zeigt, und der untere Balken den zeitlichen Ablauf in der erfindungsgemäßen Vorrichtung 1 zum adaptiven Abbau von Crashenergie zeigt. Wie aus Fig. 3 ersichtlich ist, unterschieden sich die beiden Vorrichtungen 1 bzw. 1' in der Zeitspanne zur Erzeugung des Steuersignals AS. Hierbei repräsentiert eine erste Zeitspanne t'_{AS} die Zeitspanne, welche die herkömmliche Vorrichtung 1' zum adaptiven Abbau von Crashenergie benötigt um das Ansteuersignal AS' zu erzeugen. Die erste Zeitspanne t'_{AS} umfasst die Erfassung und Auswertung der Sensorsignal S1 und S2 und die Plausibilisierung des ersten Sensorsignals S1 durch das zweite Sensorsignal S2 sowie die Ausführung des Algorithmus zur Erzeugung des Ansteuersignals AS'. Eine zweite Zeitspanne t_{As} repräsentiert die Zeitspanne, welche die erfindungsgemäße Vorrichtung 1 zum adaptiven Abbau von Crashenergie benötigt, um das Ansteuersignal AS zu erzeugen. Die zweite Zeitspanne t_{As} umfasst nur die Erfassung und Auswertung des Sensorsignals S sowie die Ausführung des Algorithmus zur Erzeugung des Ansteuersignals AS. Die Zeitspanne t_{A} zur Einstellung der Energieabbaufähigkeit bzw. der Steifigkeit der adaptiven Crashstruktur 5 bzw. 5' ist in beiden Vorrichtungen gleich lang, so dass der zeitliche Unterschied Δt zwischen den beiden Vorrichtungen 1, 1' durch den Unterschied zwischen der ersten Zeitspanne t'_{AS} und der zweiten Zeitspanne t_{As} bestimmt wird.

Das erfindungsgemäße Verfahren zum adaptiven Abbau von Crashenergie umfasst die folgenden Verfahrensschritte:
Erfassen und Auswerten von crashrelevanten Informationen S, Erzeugen von mindestens einem Steuersignal AS in Abhängigkeit vom Auswerteergebnis, und
Ausgeben des mindestens einen Steuersignals, um eine Energieabbaufähigkeit von mindestens einem im Crashfall deformierbaren Deformationselement 14 einer adaptiven Crashstruktur 5 ausgehend von einer Initialkonfiguration in Abhängigkeit von dem mindestens einen Steuersignal AS einzustellen. Erfindungsgemäß wird in der Initialkonfiguration der adaptiven Crashstruktur 5 eine maximale Energieabbaufähigkeit des Deformationselements 14 eingestellt, um einen mechanischen Sicherungspfad MS mit einer höchsten Steifigkeit der adaptiven Crashstruktur 5 einzurichten, wobei nach einem erkannten Crash unabhängig vom Crashtypus das mindestens eine Steuersignal AS erzeugt und ausgegeben wird, wobei in Reaktion auf das mindestens eine Steuersignal AS die Energieabbaufähigkeit des Deformationselements 14 von der maximalen Energieabbaufähigkeit in Richtung minimale Energieabbaufähigkeit verändert wird, so dass sich die Steifigkeit der adaptiven Crashstruktur 5 von der höchsten Steifigkeit in Richtung niedrigste Steifigkeit verändert.

In Reaktion auf das mindestens eine Steuersignal AS kann die Energieabbaufähigkeit des Deformationselements 14 kontinuierlich und/oder stufenweise von der maximalen Energieabbaufähigkeit in Richtung minimale Energieabbaufähigkeit verändert werden.

Ausführungsformen der vorliegenden Erfindung können als Schaltung, Vorrichtung, Verfahren, Datenverarbeitungsprogramm mit Programmcodemitteln und/oder als Computerprogrammprodukt realisiert werden. Entsprechend kann die vorliegende Erfindung vollständig als Hardware und/oder als Software und/oder als Kombination aus Hardware- und/oder Softwarekomponenten ausgeführt werden. Zudem kann die vorliegende Erfindung als Computerprogrammprodukt auf einem computernutzbaren Speichermedium mit computerlesbarem Programmcode ausgeführt werden, wobei verschiedene computerlesbare Speichermedien wie Festplatten, CD-ROMs, optische oder magnetische Speicherelemente usw. benutzt werden können.

Die computernutzbaren oder computerlesbaren Medien können beispielsweise elektronische, magnetische, optische, elektromagnetische Infrarot- oder Halbleitersysteme, Vorrichtungen, Geräte oder Verbreitungsmedien umfassen. Zudem können die computerlesbaren Medien eine elektrische Verbindung mit einer oder mehreren Leitungen, eine tragbare Computerdiskette, einen Speicher mit direktem Zugriff (RAM), einen Nur-Lese-Speicher (ROM), einen löschbaren und programmierbaren Nur-Lese-Speicher (EPROM oder Flashspeicher, eine optischen Leitung und eine tragbare CD-ROM umfassen. Das computernutzbare oder das computerlesbare Medium kann sogar Papier oder ein anderes geeignetes Medium sein, auf welchem das Programm geschrieben ist, und von welchem es, beispielsweise durch einen optischen Abtastvorgang des Papiers oder des anderen Mediums elektrisch erfassbar ist, dann kompiliert, interpretiert oder falls erforderlich auf andere Weise verarbeitet und dann im Computerspeicher gespeichert werden kann.

## Patentansprüche

1. Vorrichtung zum adaptiven Abbau von Crashenergie mit
- einer adaptiven Crashstruktur (5),
∘ welche mindestens ein im Crashfall deformierbares Deformationselement (14), welches zum Abbau der Crashenergie eine plastische Verformung erfährt, und
∘ eine Aktuatorik (30) umfasst, welche eine Energieabbaufähigkeit des mindestens einen im Crashfall deformierbaren Deformationselements (14) ausgehend von einer Initialkonfiguration in Abhängigkeit von mindestens einem Steuersignal (AS) einstellt,
- mindestens einer Sensoreinheit (50) zur Erfassung von crashrelevanten Informationen (S), und
- einer Auswerte- und Steuereinheit (40), welche die crashrelevanten Informationen von der mindestens einen Sensoreinheit (50) empfängt und auswertet und in Abhängigkeit vom Auswerteergebnis mindestens ein Steuersignal zur Ansteuerung der mindestens einen Aktuatorik (30) generiert und ausgibt,
- wobei die Initialkonfiguration der adaptiven Crashstruktur (5) derart konfiguriert ist, dass eine maximale Energieabbaufähigkeit des Deformationselements (14) eingestellt ist, um einen mechanischen Sicherungspfad (MS) mit einer höchsten Steifigkeit der adaptiven Crashstruktur (5) einzurichten,
**dadurch gekennzeichnet, dass**
- die Auswerte- und Steuereinheit (40) nach einem erkannten Crash unabhängig vom Crashtypus und ohne Plausibilitätsprüfung das mindestens eine Steuersignal (AS) erzeugt und zur Ansteuerung an die Aktuatorik (30) ausgibt, wobei die Aktuatorik (30) in Reaktion auf das mindestens eine Steuersignal (AS) die Energieabbaufähigkeit des Deformationselements (14) von der maximalen Energieabbaufähigkeit in Richtung minimale Energieabbaufähigkeit verändert, so dass sich die Steifigkeit der adaptiven Crashstruktur (5) von der höchsten Steifigkeit in Richtung niedrigste Steifigkeit verändert.

2. Vorrichtung nach Anspruch 1, **dadurch gekennzeichnet, dass** die Initialkonfiguration der adaptiven Crashstruktur (5) einem stromlosen Zustand der Aktuatorik (30) entspricht.

3. Vorrichtung nach Anspruch 1 oder 2, **dadurch gekennzeichnet, dass** die Aktuatorik (30) in Reaktion auf das mindestens eine Steuersignal (AS) die Energieabbaufähigkeit des Deformationselements (14) kontinuierlich und/oder stufenweise von der maximalen Energieabbaufähigkeit in Richtung minimale Energieabbaufähigkeit verändert.

4. Vorrichtung nach einem der vorhergehenden Anspruche 1 bis 3, **dadurch gekennzeichnet, dass** die adaptive Crashstruktur (5) eine Verformungseinheit (24) mit mindestens einem Verformungselement aufweist, welches die plastische Verformung des Deformationselements (14) bewirkt.

5. Verfahren zum adaptiven Abbau von Crashenergie in folgenden Verfahrensschritten:
- Erfassen und Auswerten von crashrelevanten Informationen (S), und
- Erzeugen von mindestens einem Steuersignal (AS) in Abhängigkeit vom Auswerteergebnis,
- Ausgeben des mindestens einen Steuersignals, um eine Energieabbaufähigkeit von mindestens einem im Crashfall deformierbaren Deformationselement (14) einer adaptiven Crashstruktur (5) ausgehend von einer Initialkonfiguration in Abhängigkeit von dem mindestens einen Steuersignal (AS) einzustellen,
- wobei in der Initialkonfiguration der adaptiven Crashstruktur (5) eine maximale Energieabbaufähigkeit des Deformationselements (14) eingestellt wird, um einen mechanischen Sicherungspfad (MS) mit einer höchsten Steifigkeit der adaptiven Crashstruktur (5) einzurichten,
**dadurch gekennzeichnet, dass**
- nach einem erkannten Crash unabhängig vom Crashtypus und ohne Plausibilitätsprüfung das mindestens eine Steuersignal (AS) erzeugt und ausgegeben wird, wobei in Reaktion auf das mindestens eine Steuersignal (AS) die Energieabbaufähigkeit des Deformationselements (14) von der maximalen Energieabbaufähigkeit in Richtung minimale Energieabbaufähigkeit verändert wird, so dass sich die Steifigkeit der adaptiven Crashstruktur (5) von der höchsten Steifigkeit in Richtung niedrigste Steifigkeit verändert.

6. Verfahren nach Anspruch 5, **dadurch gekennzeichnet, dass** in Reaktion auf das mindestens eine Steuersignal (AS) die Energieabbaufähigkeit des Deformationselements (14) kontinuierlich und/oder stufenweise von der maximalen Energieabbaufähigkeit in Richtung minimale Energieabbaufähigkeit verändert wird.

7. Computerprogrammprodukt mit Programmcode, der auf einem maschinenlesbaren Träger gespeichert ist, zur Durchführung des Verfahrens nach einem der Ansprüche 5 oder 6, wenn das Programm durch eine Auswerte- und Steuereinheit (40) ausgeführt wird.

## Claims

1. Device for adaptive degeneration of crash energy, having
- an adaptive crash structure (5),
∘ which comprises at least one deformation element (14) which can be deformed in the event of a crash and which experiences plastic deformation in order to degenerate the crash energy, and
∘ an actuator system (30) which sets an energy degeneration capability of the at least one deformation element (14), which can deform in the event of a crash, on the basis of an initial configuration as a function of at least one control signal (AS),
- at least one sensor unit (50) for sensing crash-relevant information (S), and
- an evaluation and control unit (40) which receives and evaluates the crash-relevant information from the at least one sensor unit (50) and generates and outputs, as a function of the evaluation result, at least one control signal for actuating the at least one actuator system (30),
- wherein the initial configuration of the adaptive crash structure (5) is configured in such a way that a maximum energy degeneration capability of the deformation element (14) is set in order to configure a mechanical securing path (MS) with maximum rigidity of the adaptive crash structure (5),
**characterized in that**
- after a detected crash the evaluation and control unit (40) generates the at least one control signal (AS) independently of the type of crash and without plausibility checking, and outputs said control signal (AS) to the actuator system (30) for the purpose of actuation, wherein, in reaction to the at least one control signal (AS), the actuator system (30) changes the energy degeneration capability of the deformation element (14) from the maximum energy degeneration capability in the direction of the minimum energy degeneration capability, with the result that the rigidity of the adaptive crash structure (5) changes from the maximum rigidity in the direction of the lowest rigidity.

2. Device according to Claim 1, **characterized in that** the initial configuration of the adaptive crash structure (5) corresponds to a currentless state of the actuator system (30).

3. Device according to Claim 1 or 2, **characterized in that**, in reaction to the at least one control signal (AS), the actuator system (30) changes the energy degeneration capability of the deformation element (14) continuously and/or incrementally from the maximum energy degeneration capability in the direction of the minimum energy degeneration capability.

4. Device according to one of the preceding Claims 1 to 3, **characterized in that** the adaptive crash structure (5) has a deformation unit (24) with at least one deformation element which brings about the plastic deformation of the deformation element (14) .

5. A method for the adaptive degeneration of crash energy in the following method steps:
- Detecting and evaluating crash-relevant information (S) and
- Generating at least one control signal (AS) as a function of the evaluation result,
- Outputting the at least one control signal in order to set an energy degeneration capability of at least one deformation element (14), which can deform in the event of a crash, of an adaptive crash structure (5) on the basis of an initial configuration as a function of the at least one control signal (AS),
- wherein in the initial configuration of the adaptive crash structure (5) a maximum energy degeneration capability of the deformation element (14) is set in order to configure a mechanical securing path (MS) with maximum rigidity of the adaptive crash structure (5),
**characterized in that**
- after a crash has been detected, the at least one control signal (AS) is generated and output independently of the type of crash and without plausibility checking, wherein, in reaction to the at least one control signal (AS), the energy degeneration capability of the deformation element (14) is changed from the maximum energy degeneration capability in the direction of the minimum energy degeneration capability, with the result that the rigidity of the adaptive crash structure (5) changes from the maximum rigidity in the direction of the lowest rigidity.

6. Method according to Claim 5, **characterized in that**, in reaction to the at least one control signal (AS), the energy degeneration capability of the deformation element (14) is changed continuously and/or incrementally from the maximum energy degeneration capability in the direction of the minimum energy degeneration capability.

7. A computer program product having program code which is stored on a machine-readable carrier, for carrying out the method according to one of Claims 5 or 6 when the program is executed by an evaluation and control unit (40).

## Revendications

1. Dispositif de résorption adaptative de l'énergie de collision comprenant
- une structure de collision adaptative (5),
* laquelle comprend au moins un élément de déformation (14) déformable en cas de collision, lequel subit une déformation plastique pour résorber l'énergie de collision, et
* un mécanisme d'actionnement (30) qui règle l'aptitude à la résorption d'énergie de l'au moins un élément de déformation (14) déformable en cas de collision en partant d'une configuration initiale en fonction d'au moins un signal de commande (AS),
- au moins une unité de détection (50) pour détecter des informations en rapport avec la collision (S), et
- une unité d'interprétation et de commande (40) qui reçoit et interprète les informations en rapport avec la collision provenant de l'au moins une unité de détection (50), puis génère et délivre au moins un signal de commande destiné à commander l'au moins un mécanisme d'actionnement (30) en fonction du résultat de l'interprétation,
- la configuration initiale de la structure de collision adaptative (5) étant configurée de telle sorte qu'une aptitude à la résorption d'énergie maximale de l'élément de déformation (14) est réglée afin d'établir un chemin de sécurité mécanique (MS) ayant une rigidité la plus élevée de la structure de collision adaptative (5),
**caractérisé en ce que**
- l'unité d'interprétation et de commande (40), après une collision détectée, indépendamment du type de collision et sans contrôle de plausibilité, génère l'au moins un signal de commande (AS) et le délivre au mécanisme d'actionnement (30) pour la commande, le mécanisme d'actionnement (30), en réaction à l'au moins un signal de commande (AS), modifiant l'aptitude à la résorption d'énergie de l'élément de déformation (14) de l'aptitude à la résorption d'énergie maximale en direction de l'aptitude à la résorption d'énergie minimale, de sorte que la rigidité de la structure de collision adaptative (5) soit modifiée de la rigidité la plus élevée en direction de la rigidité la plus basse.

2. Dispositif selon la revendication 1, **caractérisé en ce que** la configuration initiale de la structure de collision adaptative (5) correspond à un état hors tension du mécanisme d'actionnement (30).

3. Dispositif selon la revendication 1 ou 2, **caractérisé en ce que** le mécanisme d'actionnement (30), en réaction à l'au moins un signal de commande (AS), modifie continuellement et/ou graduellement l'aptitude à la résorption d'énergie de l'élément de déformation (14) de l'aptitude à la résorption d'énergie maximale en direction de l'aptitude à la résorption d'énergie minimale.

4. Dispositif selon l'une des revendications 1 à 3, **caractérisé en ce que** la structure de collision adaptative (5) présente une unité de déformation (24) comprenant au moins un élément de déformation qui provoque la déformation plastique de l'élément de déformation (14).

5. Procédé de résorption adaptative de l'énergie de collision comprenant les étapes de procédé suivantes :
- détection et interprétation d'informations en rapport avec la collision (S), et
- génération d'au moins un signal de commande (AS) en fonction du résultat de l'interprétation,
- délivrance de l'au moins un signal de commande afin de régler une aptitude à la résorption d'énergie d'au moins un élément de déformation (14) déformable en cas de collision d'une structure de collision adaptative (5) en partant d'une configuration initiale en fonction de l'au moins un signal de commande (AS),
- une aptitude à la résorption d'énergie maximale de l'élément de déformation (14) étant réglée dans la configuration initiale de la structure de collision adaptative (5) afin d'établir un chemin de sécurité mécanique (MS) ayant une rigidité la plus élevée de la structure de collision adaptative (5),
**caractérisé en ce que**
- après une collision détectée, indépendamment du type de collision et sans contrôle de plausibilité, l'au moins un signal de commande (AS) est généré et délivré, l'aptitude à la résorption d'énergie de l'élément de déformation (14), en réaction à l'au moins un signal de commande (AS), étant modifiée de l'aptitude à la résorption d'énergie maximale en direction de l'aptitude à la résorption d'énergie minimale, de sorte que la rigidité de la structure de collision adaptative (5) soit modifiée de la rigidité la plus élevée en direction de la rigidité la plus basse.

6. Procédé selon la revendication 5, **caractérisé en ce qu'**en réaction à l'au moins un signal de commande (AS), l'aptitude à la résorption d'énergie de l'élément de déformation (14) est modifiée continuellement et/ou graduellement de l'aptitude à la résorption d'énergie maximale en direction de l'aptitude à la résorption d'énergie minimale.

7. Produit programme informatique comprenant un code de programme qui est enregistré sur un support lisible par une machine, pour mettre en oeuvre le procédé selon l'une des revendications 5 ou 6, lorsque le programme est exécuté par une unité d'interprétation et de commande (40).
